# EUROPÄISCHE PATENTSCHRIFT

(11) **EP 0 964 778 B1**
(45) Veröffentlichungstag und Bekanntmachung des Hinweises auf die Patenterteilung: **09.04.2003**
(21) Anmeldenummer: 97937531.8
(22) Anmeldetag: 30.07.1997
(51) Int. Cl.: B29D 31/00

(54) **LAUFROLLE**
TREAD ROLLER
GALET DE ROULEMENT

(30) Priorität: 31.07.1996 DE 19630811; 15.04.1997 DE 19715721
(43) Veröffentlichungstag der Anmeldung: 22.12.1999
(73) Patentinhaber: Kistner, Rolf, 83317 Teisendorf (DE)
(72) Erfinder: Kistner, Rolf, 83317 Teisendorf (DE)
(74) Vertreter: Fritsche, Rainer, Dipl.-Wirtsch.-Ing.
(86) Internationale Anmeldenummer: EP9704151
(87) Internationale Veröffentlichungsnummer: WO98004400

(56) Entgegenhaltungen:
- EP-A- 0 298 356
- DE-C- 945 072
- FR-A- 2 462 596
- FR-A- 2 572 988
- GB-A- 2 084 508
- GB-A- 2 118 101
- US-A- 4 588 542
- US-A- 5 312 844

## Beschreibung

Die Erfindung betrifft eine Laufrolle gemäß dem Oberbegriff des Anspruchs 1.

Bei einem aus der Praxis bekannten Verfahren zum Herstellen einer Laufrolle wird eine Kunststoffnabe in eine Spritz- oder Gießform eingelegt, der nach dem Schließen mittels einer Zuführeinrichtung von dem Formrand aus ein Kunststoffmaterial für den die Lauffläche bildenden Mantel zugeführt wird. Nach Abschluß des Spritz- oder Gießvorganges und nach Öffnen der Form muß die dann herausgenommene Laufrolle noch einer Nachbearbeitung zugeführt werden, um die Spritzgrate oder Angüße an der Außenseite des Laufrollenmantels zu beseitigen, die sich während des Spritz- oder Gießvorganges an der der Zuführeinrichtung für das Kunststoffmaterial gegenüberliegenden Seitenfläche der Laufrolle gebildet haben. Dieser weitere Bearbeitungsschritt ist nicht nur zeit- und damit kostenintensiv, sondern erfordert auch das Breitstellen hierzu geeigneter Maschinen.

Für den Laufflächenmantel und die Nabe werden weiterhin aufgrund der für diese beiden Bauteile unterschiedlichen Anforderungen nicht die gleichen Materialien verwendet. Meist wird für die Nabe ein harter Werkstoff, beispielsweise ein Duroplast oder ein metallischer Werkstoff eingesetzt, wogegen für den Laufflächenmantel ein weicherer Werkstoff, wie beispielsweise ein Thermoplast oder ein Elastomer, wie zum Beispiel Gießurethan verwendet wird. Je nach den für die Nabe und für den Laufflächenmantel verwendeten Materialien können insbesondere bei einem drucklosen Gießverfahren Lufteinschlüsse in dem Laufflächenmantel entstehen. Abgesehen von der hierdurch beeinträchtigten Optik der Laufrolle können derartige Lufteinschlüsse zu einem Ablösen des Laufflächenmantels von der Nabe führen.

Aus der EP-A-0 298 356 geht ein Verfahren zum Herstellen eines Kunststoffteiles sowie dieses Bauteil hervor. Hierbei wird ein metallisches Einlegeteil, wie ein Wälzlager oder eine Gleitbuchse, in ein Formwerkzeug unter Spritz- bzw. Preßdruck in eine polymere Kunststoffmasse eingebettet. Um zu verhindern, daß das Einlegeteil während der Herstellung unzulässig belastet wird, wird der polymeren Kunststoffmasse ein Treibmittel beigemischt. Das Formwerkzeug wird nach dem Einsetzen des Einlegeteils mit der Kunststoffmasse mit Treibmittelbeimischung unter einem vergleichsweise niedrigen Druck gefüllt. Danach wird vom Treibmittel im Formwerkzeug ein Druck aufgebaut, durch den die Kunststoffmasse zur Bildung einer Lauffläche gegen das Formwerkzeug und gegen den Außenumfang des Einlegeteils expandiert. Das so erzeugte Bauteil kann beispielsweise als Riemenspannrolle verwendet werden

Es ist Aufgabe der vorliegenden Erfindung, eine Laufrolle der eingangs genannten Art zu schaffen, bei der für die Nabe und für den Laufflächenmantel der jeweils optimale Werkstoff eingesetzt werden kann, ohne daß durch die gewählte Werkstoffkombination die Gefahr einer Beeinträchtigung der Optik und/oder der Funktion der Laufrolle auftritt.

Die vorstehende Aufgabe wird durch die Merkmale des Anspruchs 1 gelöst. Durch den wenigstens einen an der Außenumfangsfläche vorgesehenen sowie drehfest mit der Nabe verbundenen Zwischenmantel wird eine Trennung zwischen der Nabe und dem Laufflächenmantel vorgenommen. Hierdurch können für die Nabe und für den Laufflächenmantel jeweils die für ihre Funktion optimalen Werkstoffe eingesetzt werden, ohne daß die Gefahr besteht, daß es beim Herstellen der Laufrolle zu einer Beeinträchtigung der Optik und/oder Funktion kommt. Insbesondere werden hierdurch Lufteinschlüsse vermieden, da das Material für den Zwischenmantel optimal auf den für den Laufflächenmantel vorgesehenen Werkstoff abgestimmt werden kann. Mit anderen Worten wird durch die vorgeschlagene Lösung ermöglicht, daß unabhängig von dem für die Nabe verwendeten Material das für den Laufflächenmantel optimal geeignete Material eingesetzt werden kann.

Grundsätzlich reicht es zur Lösung der vorstehenden Aufgabe aus, wenn der oder die Zwischenmäntel nur einen Teil der Außenumfangsfläche der Nabe abdecken. Eine besonders haltbare Verbindung zwischen der Nabe und dem Laufflächenmantel bei einer wenig oder überhaupt nicht beeinträchtigten Optik wird dadurch erreicht, daß der Zwischenmantel zumindest annähernd vollständig die Außenumfangsfläche der Nabe überdeckt.

Die drehfeste Verbindung zwischen dem Zwischenmantel und dem Laufflächenmantel kann auf unterschiedliche Weise erreicht werden. So kann, je nach Material für den Zwischenmantel, eine stoffschlüssige Verbindung zwischen Zwischenmantel und Laufflächenmantel vorhanden sein. Ebenfalls besteht die Möglichkeit, daß die drehfeste Verbindung zwischen Zwischenmantel und Laufflächenmantel formschlüssig erfolgt, beispielsweise in der Weise, daß der Zwischenmantel Durchbrechungen oder Hinterschneidungen aufweist, in die das Material für den Laufflächenmantel während des Herstellvorgangs einfließen kann, so daß Formschluß vorhanden ist.

Um eine gute sowie drehfeste Verbindung zwischen dem Zwischenmantel und dem Laufflächenmantel zu erreichen, hat es sich weiterhin als vorteilhaft erwiesen, wenn der Zwischenmantel wenigstens eine, vorzugsweise zwei zumindest annähernd radial erstreckende und zumindest abschnittsweise ringförmig an der Außenumfangsfläche umlaufende Erhebungen aufweist. Diese Erhebungen können mit den bereits vorstehend erwähnten Durchbrechungen versehen sein, die für eine u.a. formschlüssige Verbindung zwischen Zwischenmantel und Laufflächenmantel vorgesehen sind. Darüber hinaus können im Falle von zwei Erhebungen diese auch so gestaltet sein, daß sie eine der auftretenden Druck- bzw. Kraftverteilung beim Einsatz der Laufrolle angepaßte Kontur besitzen. Dies kann beispielsweise dadurch erreicht werden, daß die beiden Erhebungen im Querschnitt zumindest annähernd pyramidenförmig oder kamelhöckerartig ausgebildet sind. Mit anderen Worten divergieren die zueinander weisenden Seiten der Erhebung von der Außenumfangsfläche der Nabe aus in radialer Richtung zu ihren äußeren, vorzugsweise abgerundeten Enden. Da beim Einsätz der Laufrolle die Druckverteilung, im Querschnitt der Laufrolle betrachtet, im wesentlichen eine Parabelform annimmt, wird durch die vorstehend vorgeschlagene Lösung erreicht, daß die Kontur der beiden Erhebungen diesem Parabelverlauf der Druckverteilung angepaßt ist. Im Ergebnis läßt sich hierdurch eine höhere Lebensdauer der Laufrolle erzielen, insbesondere wenn die Laufrolle hohen Geschwindigkeiten ausgesetzt ist, da durch die angepaßte Kontur der Erhebungen ein Ablösen des Laufflächenmantels von der Nabe bzw. dem Zwischenmantel vermieden wird.

Es wird vermutet, daß neben dem Materialmix zwischen Nabe und Lauffläche eine weitere Ursache für die Entstehung der Lufteinschlüsse in der Störung der Gießmaterialströmung während des Gießvorgangs infolge von scharfen Kanten und/oder Bearbeitungsgraten an der Nabe besteht. Es hat sich deshalb als vorteilhaft erwiesen, wenn zumindest ein Teil der in Kontakt mit dem Laufflächenmantel kommenden Ecken und/oder Kanten des Zwischenmantels abgerundet sind. Vorzugsweise besitzt der Zwischenmantel auf seinen mit dem Laufflächenmantel in Berührung kommenden Flächen durchgehend keine Kanten, insbesondere scharfe Kanten oder Grate. Weist der Zwischenmantel Erhebungen auf, so hat es sich als vorteilhaft erwiesen, wenn zumindest diese Erhebungen an ihren radialen äußeren Enden abgerundet sind.

Um einen fehlerfreien Betrieb der Laufrolle sicherzustellen und darüber hinaus das Anbringen des Zwischenmantels an der Nabe zu erleichtern, ist es weiterhin von Vorteil, wenn die Außenumfangsfläche der Nabe eine Ausnehmung aufweist, in die der Zwischenmantel axial fest einsetzbar ist. Sofern zwei oder mehr Zwischenmäntel vorgesehen sind, können auch zwei oder mehr Ausnehmungen oder nur eine einzige Ausnehmung zur Aufnahme aller Zwischenmäntel vorgesehen sein.

Grundsätzlich besteht die Möglichkeit, daß der Zwischenmantel auch mit der Nabe drehfest, aber nicht lösbar verbunden ist. Beispielsweise kann der Zwischenmantel auf der Nabe aufgeschrumpft oder aufvulkanisiert sein. Ist jedoch die Nabe aus einem hochwertigen Material hergestellt, so daß bei Abnutzung des Laufflächenmantels ein nochmaliger Einsatz der Nabe möglich ist, so kann weiterhin vorgesehen sein, daß der Zwischenmantel lösbar, vorzugsweise durch Schraubmittel an der Nabe gehalten ist. Hierdurch kann dann durch Lösen der Schraubmittel der Zwischenmantel und ggf. die Reste des sich noch an dem Zwischenmantel befindlichen Laufflächenmantels von der Nabe abgenommen werden und die Nabe einem neuen Einsatz, insbesondere einem neuen Herstellvorgang zur Fertigung einer neuen Laufrolle zugeführt werden. Darüber hinaus ist es hierdurch möglich, daß der Laufflächenmantel durch den Benutzer auch bereits dann ausgetauscht werden kann, wenn die Lauffläche noch intakt, jedenfalls noch nicht vollständig abgenutzt ist. Dies ist insbesondere dann von Vorteil, wenn die Laufrolle insbesondere mit einer hochwertigen Nabe für verschiedene Zwecke und/oder Geschwindigkeitsbereiche, wie beispielsweise hohe (= Könner) oder geringe Geschwindigkeiten (=Anfänger) bzw. für den Hockey- oder Allround-Einsatz wechselweise verwendet werden soll. Durch die Lösbarkeit des Zwischenmantels und damit des mit dem Zwischenmantel fest verbundenen Laufflächenmantels von der Nabe kann dies ohne Schwierigkeit von jedem Benutzer ausgeführt werden. Bisher war dies nicht möglich, da Laufflächenmantel und Nabe eine untrennbare Einheit bildeten.

Das lösbare Anbringen des Zwischenmantels kann beispielsweise dadurch geschehen, daß der Zwischenmantel mittels Schrauben an der Nabe befestigt ist, die in sich im wesentlichen radial erstreckende Gewindebohrungen der Nabe einschraubbar sind. Hierbei kann beispielsweise die Nabe so gestaltet sein, daß sie Speichen aufweist, in denen die Gewindebohrungen vorgesehen sind. Ebenso besteht die Möglichkeit, daß der Zwischenmantel mit sich radial nach innen erstreckende Befestigungslappen versehen ist, die beim Befestigen des Zwischenmantels durch die Schraubmittel festlegbar sind. Dies kann beispielsweise dadurch geschehen, daß die Befestigungslappen Durchgangslöcher aufweisen, durch die die Schraubmittel hindurchgesteckt werden können.

Um die Montage der Laufrolle weiter zu vereinfachen, hat es sich als vorteilhaft erwiesen, wenn die Nabe aus wenigstens zwei in einer Nabenradialebene aufeinandersetzbare Nabenhälften gebildet ist, die drehfest miteinander verbunden sind. Hierbei hat es sich insbesondere als vorteilhaft erwiesen, wenn die Teilung der Nabe in die beiden Nabenhälften in der Radialsymmetrieebene der Nabe erfolgt.

Grundsätzlich besteht die Möglichkeit, daß die beiden Nabenhälften unlösbar miteinander verbunden sind. Um jedoch die Montage der Nabe, insbesondere das Anbringen bzw. das Austauschen des Zwischen- und des Laufflächenmantels und die Wiederverwendbarkeit der Nabe zu erleichtern, kann weiterhin vorgesehen sein, daß die beiden Nabenhälften lösbar, vorzugsweise durch sich zumindest annähernd parallel zur Nabenachse erstreckende Schraubmittel drehfest miteinander verbunden sind.

Um die Schraubmittel in einer Weise an der Nabe einsetzen zu können, die die Optik und die Funktionssicherheit der Nabe nicht beeinträchtigt, kann weiterhin vorgesehen sein, daß die Nabenhälften einen Innenring und einen Außenring aufweisen, die durch vorzugsweise drei, zumindest annähernd radial verlaufende Stege miteinander verbunden sind, wobei die Stege zur Aufnahme der Schraubmittel vorgesehen sind. Hierbei kann weiterhin vorgesehen sein, daß in der einen Nabenhälfte eine Durchgangsbohrung und in der anderen Nabenhälfte eine Gewindebohrung, vorzugsweise als Sacklochbohrung vorgesehen ist.

Damit bei der Montage der Nabenhälften die Bohrungen für die Schraubmittel und/oder die Stege auf einfache Weise miteinander fluchten, kann weiterhin vorgesehen sein, daß die Nabenhälften gegeneinander zentriert sind. Dies kann durch an ihren zueinanderweisenden Seiten jeweils miteinander zusammenwirkende Zentrierelemente erfolgen. Ebenso kann die Zentrierung mittels Paßschrauben ausgeführt werden, die ggf. auch Befestigungsaufgaben übernehmen.

Wie bereits vorstehend dargelegt worden ist, kann der Zwischenmantel unlösbar oder lösbar an der Nabe angebracht sein. Um den Aufbau der Laufrolle weiter zu vereinfachen, kann im Falle eines lösbaren Anbringens des Zwischenmantels vorgesehen sein, daß die Schraubmittel zum Fixieren der beiden Nabenhälften ebenfalls den Zwischenmantel halten. Hierzu kann vorgesehen sein, daß die beiden Nabenhälften an ihren zueinander weisenden Seiten einen Raum definieren, wenn sie aufeinandergesetzt sind, in den beispielsweise Befestigungslappen des Zwischenmantels aufnehmbar sind. Die Befestigungslappen weisen in diesem Fall eine Durchgangsdurchbrechung auf, durch die das Schraubmittel hindurchgeführt werden kann. Beim Aufeinanderschrauben der beiden Nabenhälften werden dann die Befestigungslappen zwischen den Nabenhälften festgeklemmt und so der Zwischenmantel drehfest sowie axial fest an der Nabe befestigt. Um dabei eine ansprechende Optik zu erzielen, ist es insbesondere von Vorteil, wenn die Nabenhälften mit dem vorstehend bereits erwähnten Innen- bzw. Außenring und den die beiden Ringe miteinander verbindenden Stegen versehen ist, in denen die Schraubmittel aufnehmbar sind und die die Befestigungslappen des Zwischenmantels zwischen sich aufnehmen.

Ist die Laufrolle hohen Belastungen ausgesetzt, so hat es sich als vorteilhaft erwiesen, wenn die Nabe aus Metall, vorzugsweise aus Aluminium, zum Beispiel Alu-Druckguß, oder einer Legierung hiervon hergestellt ist. Wie bereits vorstehend darauf hingewiesen worden ist, tritt in einem solchen Fall das eingangs geschilderte Problem der Bildung von Blasen beim Gießen des Laufflächenmantels besonders deutlich auf, da infolge der Bearbeitungsgrate und/oder scharfen Kanten der Metallnabe dort beim Gießen ein Strömungsabriß erfolgt und damit Luftblasen entstehen. Durch den nunmehr in diesem Fall vorgesehenen Zwischenmantel wird dieses Problem elegant gelöst, da das Material des Laufflächenmantels nicht oder nur geringfügig mit der Metalloberfläche der Nabe in Berührung kommt. Dabei kann der Zwischenmantel so ausgebildet sein, daß dieser keine oder nur sehr wenige scharfe Kanten aufweist. Mit anderen Worten besitzt der Zwischenmantel nur, oder jedenfalls weitestgehend, abgerundete Flächen, so daß kein Strömungsabriß beim Gießen erfolgt. In diesem Zusammenhang hat es sich als besonders vorteilhaft erwiesen, wenn der Zwischenmantel aus einem Kunststoff, vorzugsweise einem harten Kunststoff wie ABS, PAG usw. hergestellt ist. Der Zwischenmantel selbst kann beispielsweise durch ein Spritzgießverfahren gefertigt werden. Ebenfalls kann der Zwischenmantel aus einem anderen Material, insbesondere einem relativ harten Material, wie beispielsweise Alu-Druckguß hergestellt sein.

Für das Material des Laufflächenmantels kann jeder geeignete Werkstoff vorgesehen werden, da durch die Anordnung des Zwischenmantels auf das Material der Nabe keine Rücksicht genommen werden muß. Es hat sich als zweckmäßig erwiesen, wenn als Material für den Laufflächenmantel ein thermoplastischer Kunststoff, der besser recyclebar ist, oder ein Elastomer, vorzugsweise Polyurethan verwendet wird.

Wie bereits vorstehend erläutert worden ist, nimmt die beim Einsatz der Laufrolle auftretende Druckverteilung einen, im Axialquerschnitt der Laufrolle betrachtet, parabelförmigen Verlauf an. Bei den in der Praxis im Einsatz befindlichen Laufrollen hat es sich dabei als nachteilig erwiesen, daß die zur formschlüssigen Verbindung zwischen Nabe und Laufflächenmantel vorhandenen, ringförmig angeordneten Fortsätze an der Nabe in der Radialsymmetrieebene der Laufrolle bzw. der Nabe und damit an der Stelle des höchsten auftretenden Druckes, d.h. der Spitze der Parabel angeordnet sind. Es hat sich gezeigt, daß durch diese Anordnung bei Laufrollen, die verhältnismäßig hohen Geschwindigkeiten ausgesetzt sind, ein Ablösen des Laufflächenmantels auftritt, da an der Stelle der höchsten Druckbelastung der geringste Querschnitt, betrachtet in Radialrichtung, am Laufflächenmantel vorhanden ist.

Die erfindungsgemäße Laufrolle soll darüber hinaus einer derartigen Gefahr entgegenwirken. Dies geschieht gemäß der Erfindung dadurch, daß die Nabe an ihrer Außenumfangsfläche eine der Druckverteilung beim Einsatz der Laufrolle angepaßte Kontur besitzt. Dabei kann die Nabe sowohl einen Zwischenmantel in der vorstehend geschilderten Form aufweisen, als auch ohne einen derartigen Zwischenmantel ausgestattet sein.

Die an die Druckverteilung beim Einsatz der Laufrolle angepaßte Kontur kann auf unterschiedliche Art und Weise gebildet sein. So hat es sich beispielsweise als zweckmäßig erwiesen, daß an der Außenumfangsfläche der Nabe zwei zueinander beabstandete, sich radial erstreckende und zumindest abschnittsweise in Umfangsrichtung der Nabe umlaufende Ringe vorgesehen sind, deren zueinander weisenden Seiten in Richtung der Außenumfangsfläche der Nabe konvergieren. Durch diese Konvergenz ist der Verlauf der beiden Ringe dem Verlauf der Druckverteilung angepaßt, wodurch hohe Laufleistungen auch bei hohen Geschwindigkeiten erreicht werden können.

Es hat sich hierbei als vorteilhaft erwiesen, wenn die Ringe einen zumindest annähernd trapezförmigen Querschnitt aufweisen und/oder die beiden Ringe symmetrisch zur Radialsymmetrieachse der Nabe an der Außenumfangsfläche angeordnet sind.

Zur Verringerung des Gewichts kann darüber hinaus vorgesehen sein, daß die Ringe, in Achsrichtung der Nabe betrachtet, beabstandet zum Nabenrand angeordnet sind. Weiterhin können die Ringe zur Erzeugung einer formschlüssigen Verbindung zwischen der Nabe und dem Laufflächenmantel mit Durchbrechungen versehen sein. Diese Durchbrechungen können entweder ovale Löcher in den Ringen sein oder aber nach radial außen offen sein und, ebenfalls in Achsrichtung der Nabe betrachtet, zumindest annähernd die Form eines auf dem Kopf stehenden Buchstabens "T" aufweisen.

Weitere vorteilhafte Ausgestaltungen sowie Ausführungsbeispiele der Erfindung werden nachstehend anhand der Zeichnungsfiguren erläutert. Es zeigt:
- Figur 1: eine Ansicht auf eine erfindungsgemäße Laufrolle;
- Figur 2: einen Schnitt durch die in Figur 1 dargestellte Laufrolle entlang der Linie VII-VII in Figur 1;
- Figur 3: eine Ansicht auf einen Zwischenmantel, der bei der in Figur 1 gezeigten Laufrolle Verwendung findet;
- Figur 4: einen Schnitt durch den in Figur 3 gezeigten Zwischenmantel entlang der Linie IX-IX in Figur 3;
- Figur 5: eine Ansicht einer ersten Nabenhälfte der in Figur 1 gezeigten Laufrolle;
- Figur 6: einen Schnitt durch die in Figur 5 gezeigte, erste Nabenhälfte entlang der Linie XI-XI in Figur 5;
- Figur 7: eine Ansicht einer zweiten Nabenhälfte der in Figur 1 gezeigten Laufrolle;
- Figur 8: einen Schnitt durch die in Figur 7 gezeigte, zweite Nabenhälfte entlang der Linie XIII-XIII in Figur 7;
- Figur 9: eine Ansicht einer bekannten Laufrolle;
- Figur 10: einen Schnitt durch die in Figur 9 gezeigte, bekannte Laufrolle entlang der Linie XV-XV in Figur 9,
- Figur 11: eine Ansicht einer weiteren erfindungsgemäßen Laufrolle; und
- Figur 12: einen Schnitt durch die in Figur 11 gezeigte Laufrolle entlang der Linie XVI-XVI in Figur 11.

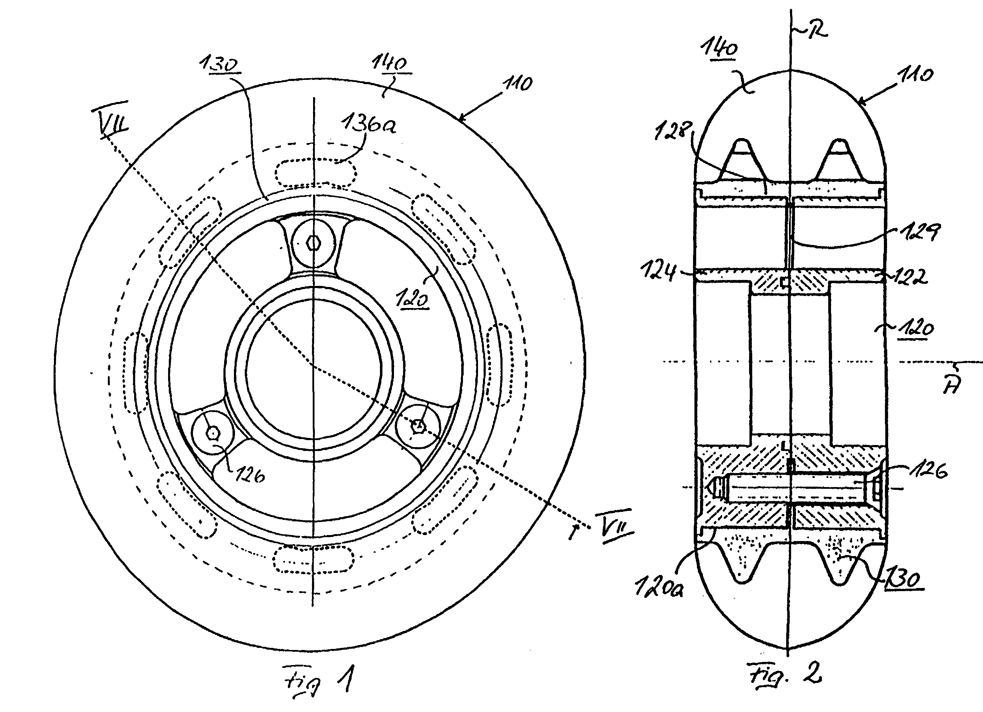

Bevor mit der Beschreibung der Ausführungsbeispiele fortgefahren wird, ist zu bemerken, daß bei den in den Figuren 1 bis 12 gezeigten Ausführungsbeispielen gleiche Bauteile mit gleichen Bezugszeichen durchgehend bezeichnet sind.

Eine in den Figuren 1 und 2 gezeigte, erfindungsgemäße Laufrolle 110 weist eine Nabe 120 aus einem Aluminiumwerkstoff, vorzugsweise aus Aluminiumdruckguß, einen Zwischenmantel 130 aus einem harten Kunststoff, insbesondere aus ABS oder PAG, sowie einen Laufflächenmantel 140 aus einem vorzugsweise thermoplastischen Kunststoff auf.

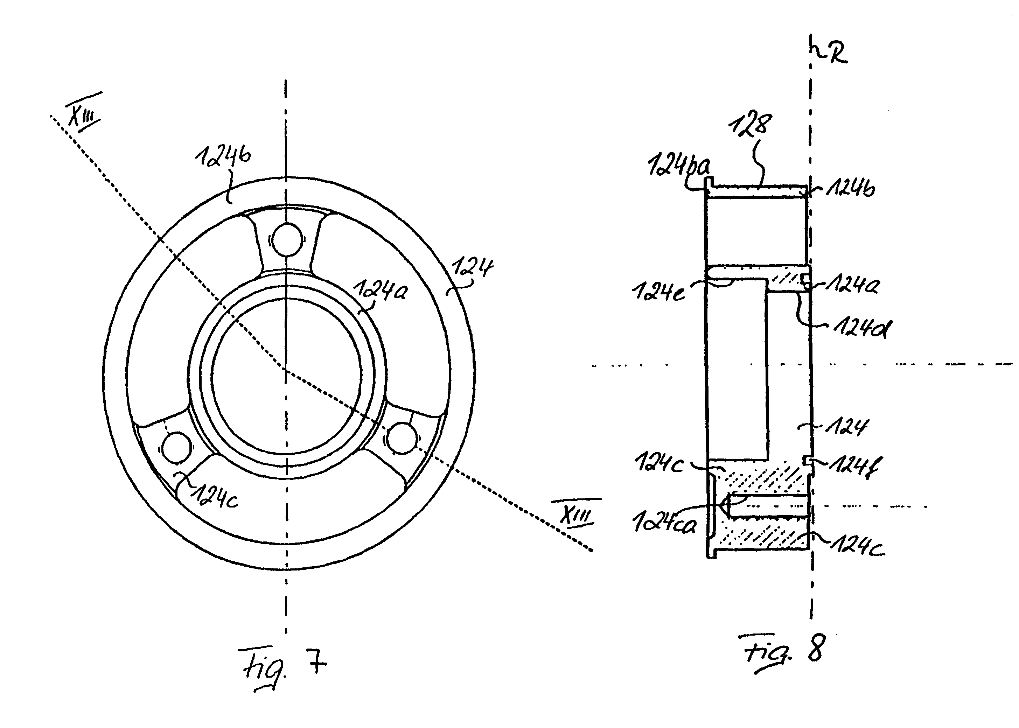

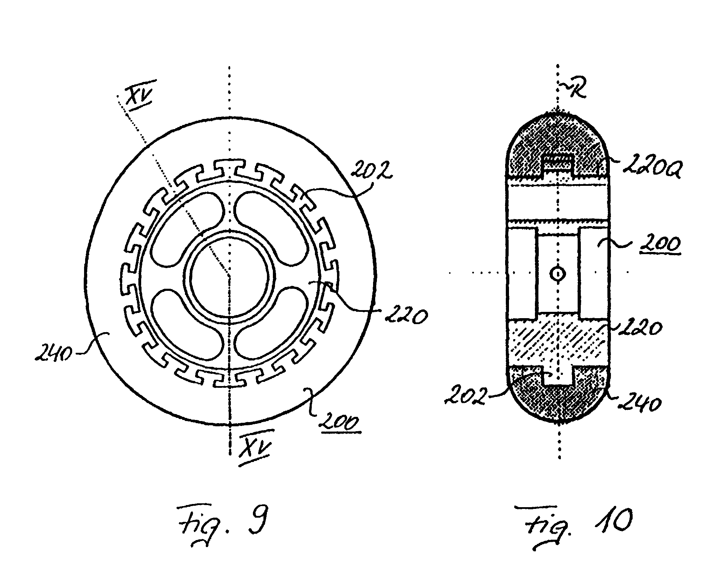

Wie insbesondere aus Figur 2 hervorgeht, ist die Nabe 120 aus einer ersten Nabenhälfte 122, die in den Figuren 5 und 6 näher dargestellt ist, sowie aus einer zweiten Nabenhälfte 124 aufgebaut, die näher in den Figuren 7 und 8 gezeigt ist. Die beiden Nabenhälften 122, 124 sind in einer Radialsymmetrieebene R der Laufrolle 110 aufeinandergesetzt. Zur besseren Orientierung sind in der Figur 5 Teile der Gesamtlaufrolle 110 noch durch Phantomlinien wiedergegeben.

Wie aus den Figuren 5 bis 8 hervorgeht, weisen die beiden Nabenhälften 122, 124 jeweils einen Innenring 122a, 124a sowie einen Außenring 122b, 124b auf. Die Innenringe 122a, 124a sowie die Außenringe 122b, 124b der beiden Nabenhälften 122, 124 sind jeweils durch drei radial verlaufende Stege bzw. Speichen 122c, 124c miteinander verbunden. Die Stege 22c, 24c sind jeweils in einer ca. 120°-Teilung zueinander angeordnet.

Die Stege 122c der ersten Nabenhälfte 122 weisen, wie dies insbesondere aus Figur 6 hervorgeht, Durchgangslöcher 122ca auf, die zur Aufnahme von Schrauben 126 dienen, wie dies nachstehend noch erläutert wird. An dem, bezogen auf Figur 11, rechten stirnseitigen Ende ist das Durchgangsloch 122ca mit einer Ansenkung 122cb versehen.

Wie weiterhin insbesondere aus den Figuren 2 und 6 hervorgeht, ist die erste Nabenhälfte 122 an ihrem äußeren Ring 122b an der, ebenfalls bezogen auf Figur 6, rechten Stirnseite mit einem radial nach außen vorstehenden Ringsteg 122ba versehen. Dieser Ringsteg 122ba definiert zusammen mit dem in entsprechender Weise an der zweiten Nabenhälfte 124 vorhandenen Ringsteg 124ba eine Ausnehmung 128, in die der vorstehend erwähnte Zwischenmantel 130 einsetzbar ist. Durch die beiden Ringstege 122ba, 124ba ist der Zwischenmantel 130 axial fest in der Ausnehmung 128 gehalten.

Wie ebenfalls aus der Figur 6 hervorgeht, ist die erste Nabenhälfte 122 an ihrer Innenumfangsfläche 122d mit einer Lageraufnahmefläche 122e versehen, die sich von dem, bezogen auf Figur 6, rechten stirnseitigen Ende der ersten Nabenhälfte 122 in axialer Richtung in die erste Nabenhälfte 122 hineinerstreckt. Durch eine Durchmesserverringerung wird ein nicht näher bezeichneter Absatz gebildet, der als Anlagefläche für das in der Lagerfläche 122e aufnehmbare Lager dient.

Wie weiterhin insbesondere aus Figur 6 hervorgeht, weist die erste Nabenhälfte 122 einen an ihrer zu der zweiten Nabenhälfte 124 weisenden Seite angeordneten Ring 122f auf, der zusammen mit einer entsprechend gestalteten Ringausnehmung 124f der zweiten Nabenhäifte 124 eine Zentriereinrichtung bildet, die das Aufeinandersetzen der beiden Nabenhälften 122, 124 erleichtert. Der Zentrierring 122f bzw. die ringförmige Zentrierausnehmung 124f sind jeweils an dem Innenring 122a, 124a angeordnet.

Die zweite Nabenhälfte ist in den Figuren 7 und 8 gezeigt und ist bis auf die nachstehend noch erläuterten Unterschiede ebenso aufgebaut, wie die in Figuren 5 und 6 gezeigte, erste Nabenhälfte 122. In den Figuren 7 und 8 sind die übereinstimmenden Bauteile der zweiten Nabenhälfte 124 mit den gleichen Buchstaben wie bei der ersten Nabenhälfte 122 gekennzeichnet nur mit dem Unterschied, daß anstelle des Bezugszeichens "122" das Bezugszeichen "124" verwendet wird.

Im Unterschied zu der ersten Nabenhälfte 122 weist die zweite Nabenhälfte 124 in ihren Stegen 124c Sacklochbohrungen 124ca auf, die jeweils mit einem Gewinde versehen sind. In diesem Zusammenhang ist noch zu bemerken, daß in Figur 7 die Sacklöcher 124ca mit sichtbaren Linien dargestellt sind, obwohl sie in Betrachtungsrichtung der Figur 7 nicht erkennbar sind.

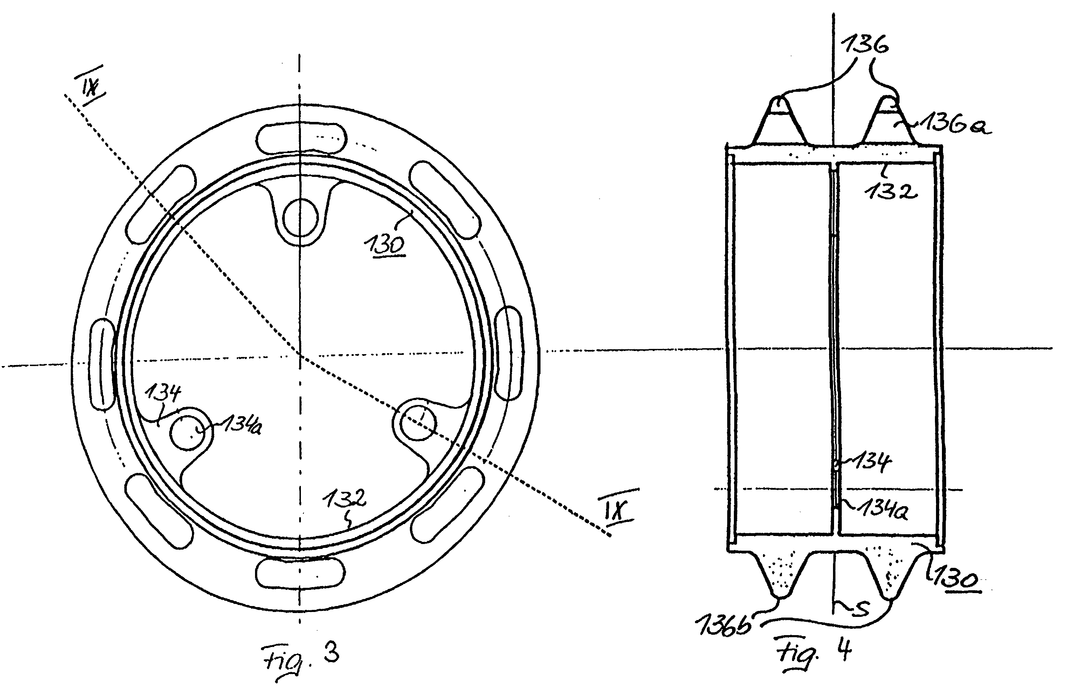

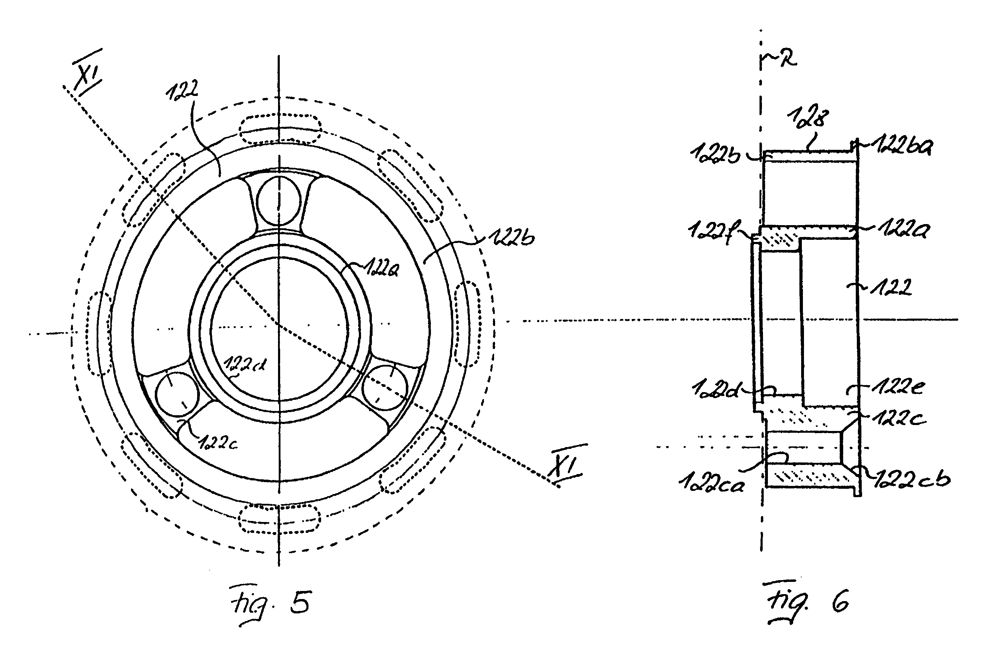

Wie bereits vorstehend geschildert worden ist, ist in die durch die beiden Nabenhälften 122, 124 an der Außenumfangsfläche gebildete Ausnehmung 128 der Zwischenmantel 130 eingesetzt, wie dies insbesondere aus Figur 2 hervorgeht. Der in den Figuren 3 und 4 gezeigte Zwischenmantel 130 besitzt an seiner Innenumfangsfläche 132 drei sich radial nach innen erstreckenden Befestigungslappen 134, die ebenfalls in einer ca. 120°-Teilung angeordnet sind. Die Lappen 134 sind mit Durchgangsbohrungen 134a versehen, durch die die bereits vorstehend erwähnten Schrauben 126 beim Zusammenbau der Nabe 120 hindurchgeführt werden können.

Der Zwischenmantel 130 ist darüber hinaus mit zwei pyramidenförmigen oder kamelhöckerförmigen, sich radial nach außen erstreckenden sowie ringförmig um die Außenumfangsfläche des Zwischenmantels 130 umlaufende Erhebungen 136 versehen, wie dies aus den Figuren 3 und 4 hervorgeht. Wie dabei insbesondere aus Figur 4 erkennbar ist, sind die beiden Erhebungen 136 symmetrisch zur Radialsymmetrieebene S des Zwischenmantels 130 angeordnet, die mit der Radialsymmetrieebene R der Laufrolle 110 zusammenfällt. Die kamelhöckerartigen Erhebungen 136 weisen Durchbrechungen 136a auf, die, wie dies insbesondere aus Figur 3 erkennbar ist, eine ovale Form aufweisen, wobei die "Hauptachse" des Ovals im wesentlichen in Umfangsrichtung verläuft. Die nach radial außen weisenden Enden 136b der Erhebungen 136 sowie die nicht näher bezeichneten Kanten der Durchbrechungen sind, wie dies insbesondere aus Figur 4 erkennbar ist, abgerundet.

Beim Zusammenbau der Nabe 120 wird zunächst der Zwischenmantel 130 auf die zweite Nabenhälfte 124 in der Weise aufgelegt, daß die Befestigungslappen 134 auf den Stegen 124c der zweiten Nabenhälfte 124 aufliegen und dabei die Bohrungsachsen der Durchbrechungen 134a dieser Befestigungslappen 134 mitden Bohrungsachsen der Sacklöcher 124ca fluchten. Damit bei aufgesetzter erste Nabenhälfte 122 die Befestigungslappen 134 des Zwischenmantels 130 ohne Erhöhung der axialen Länge der beiden aufeinandergesetzten Nabenhälften 122, 124 bzw. der Gesamtnabe 120 zwischen diesen aufgenommen werden kann, bilden die beiden Na benhälften 122, 124 an ihren zueinander weisenden Seiten eine Ausnehmung 129, in die die Befestigungslappen 134 aufgenommen werden können, wie dies in Figur 2 gezeigt ist. Anschließend wird die erste Nabenhälfte 22 auf die zweite Nabenhälfte 124 in der Weise aufgesetzt, daß die Stege 122c der ersten Nabenhälfte 122 mit dem Befestigungslappen 130 sowie den Stegen 124c der zweiten Nabenhälfte übereinstimmen und die Bohrungsachsen der Durchgangsbohrungen 122ca der ersten Nabenhälfte 122 mit den Bohrungsachsen der Durchgangsbohrungen 134a der Befestigungslappen 134 sowie den Bohrungsachsen der Sacklochbohrungen 124ca der zweiten Nabenhälfte 124 fluchten. Anschließend werden die Befestigungsschrauben 126 eingeschraubt und hierdurch die beiden Nabenhälften 122, 124 aneinander befestigt, wobei gleichzeitig der Zwischenmantel 130 durch seine Befestigungslappen 134 drehfest mit der Nabe 120 verbunden wird.

Anschließend kann die so hergestellte Nabe 120 in ein entsprechendes Formwerkzeug eingelegt werden und nach weiteren Vorbereitungsmaßnahmen das für den Laufflächenmantel 140 notwendige Kunststoffmaterial in die Form eingegeben werden. Dabei fließt das Material für den Laufflächenmantel 140 auch in die Durchgangsdurchbrechungen 136a des Zwischenmantels 136 ein. Nach Aushärten des Materials für den Laufflächenmantel 140 entsteht hierdurch eine formschlüssige drehfeste Verbindung zwischen dem Zwischenmantel 130 und dem Laufflächenmantel 140. Da der Zwischenmantel 130 bereits drehfest an der Nabe 120 angebracht ist, entsteht hierdurch wiederum eine drehfeste Verbindung zwischen dem Laufflächenmantel 140 und der Nabe 120.

Ebenso besteht die Möglichkeit, daß beispielsweise durch ein entsprechend ausgebildetes Formwerkzeug oder durch ein die Nabe ersetzendes Hilfswerkzeug zuerst Zwischenmantel 130 und Laufflächenmantel 140 zu einer Einheit durch zum Beispiel einen Gießvorgang zusammengefügt werden. Anschließend kann die so gebildete Einheit an der Nabe 120 in der Weise angebracht werden, daß der Zwischenmantel 130 mit dem Laufflächenmantel 140 auf die zweite Nabenhälfte 124 in der vorstehend beschriebenen Weise aufgeschoben und ausgerichtet wird. Daraufhin kann dann die erste Nabenhälfte 122 ebenfalls in der vorstehend geschilderten Weise auf die zweite Nabenhälfte 124 aufgesetzt bzw. in den über diese Nabenhälfte 124 überstehenden Teil des Zwischenmantels 130 mit Laufflächenmantel 140 eingeschoben und an der zweiten Nabenhälfte 124 befestigt werden.

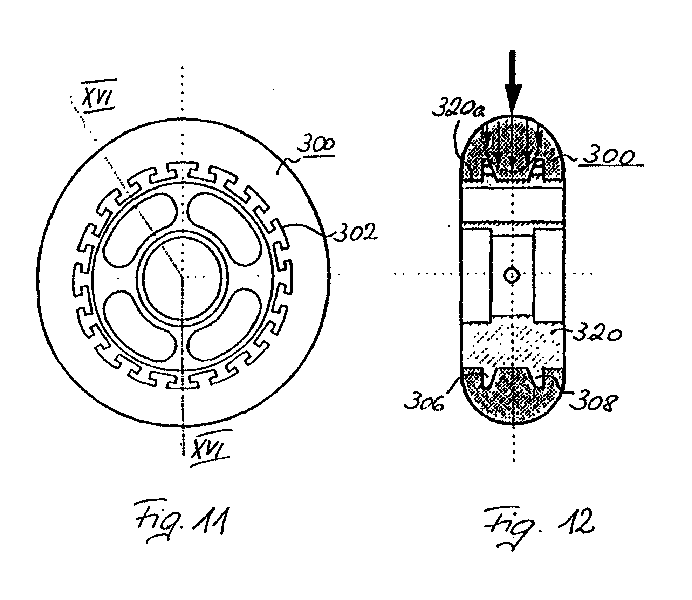

In den Figuren 11 und 12 ist eine weitere Ausführungsform der erfindungsgemäßen Laufrolle gezeigt. Bevor diese jedoch beschrieben wird, wird noch einmal auf die Figuren 9 und 10 Bezug genommen, in der eine bekannte Laufrolle 200 gezeigt ist. Die bekannte Laufrolle 200 weist an dem Außenumfang 220a ihrer Nabe 220 mehrere sich radial nach außen erstreckende, in der Radialsymmetrieebene R der Laufrolle 200 angeordnete T-förmige Fortsätze 202 auf, die Hinterschneidungen bilden, durch die der Laufflächenmantel 240 drehfest mit der Nabe 220 der bekannten Laufrolle 200 verbunden ist. Diese Fortsätze 202 liegen aber gerade in dem Bereich des beim Einsatz der Laufrolle 200 auftretenden höchsten Druckes, wie dies schematisch in der Figur 12 gezeigt ist. Da infolge der Fortsätze 202 in diesem Bereich der Querschnitt des Laufflächenmantels 240 verringert ist, kann hierdurch eine besonders schnelle Abnutzung des Laufflächenmantels 240 bis hin zur Ablösung des Laufflächenmantels 240 von der Nabe 220 auftreten.

Um dies nunmehr zu vermeiden, ist gemäß dem Ausführungsbeispiel der Figuren 11 und 12 eine Laufrolle 300 vorgesehen, die zwei axial zueinander beabstandete, sich radial erstreckende Ringe 306, 308 aus T-förmigen Fortsätzen aufweist. Diese T-förmigen Fortsätze 302 weisen einen trapezförmigen Querschnitt auf, wie dies in Figur 12 gezeigt ist. Hierbei sind die beiden Ringe 306, 308 aus den Fortsätzen 302 so zueinander angeordnet, daß die zueinanderweisenden Seiten in Richtung der Außenumfangsfläche 320a der Nabe 320 zueinander konvergieren, wie dies ebenfalls aus Figur 12 hervorgeht. Hierdurch ist die Außenumfangsfläche 320a der Nabe 320 in ihrer Kontur der beim Einsatz der Laufrolle 300 auftretenden Druckverteilung angepaßt, wie dies aus Figur 12 hervorgeht.

Es ist noch zu bemerken, daß, die vorstehend geschilderte erfindungsgemäße Lösung bei einer Laufrolle 110 mit einem Zwischenmantel 130 vorgesehen sein kann, obwohl dies in den Figuren 11 und 12 nicht gezeigt ist.

## Patentansprüche

1. Laufrolle, insbesonders für Inline-Skater, mit einer Nabe (120) und einem an der Nabe (120) drehfest angeformten, die Lauffläche aufweisenden Lauflächenmantel (140), wobei die Nabe (120) an ihrer Außenumfangsfläche (120a) mit wenigstens einem drehfest, mit ihr verbundenen Zwischenmantel (130) versehen ist, an dem zumindest teilweise der Laufflächenmantel (140) drehfest angeformt ist,
**dadurch gekennzeichnet, daß** der Zwischenmantel (130) mit sich radial einwärtserstreckenden Befestigungslappen (134) versehen ist, die mittels lösbarer Befestigungsmittel (126) anbringbar sind, wenn der Zwischenmantel (130) an der Nabe (120) angebracht wird.

2. Laufrolle nach Anspruch 1,
**dadurch gekennzeichnet, daß** die drehfeste Verbindung zwischen Zwischenmantel (130) und Laufflächenmantel (140) stoff- und/oder formschlüssig erfolgt.

3. Laufrolle nach Anspruch 1 oder 2,
**dadurch gekennzeichnet, daß** der Zwischenmantel (130) wenigstens eine, vorzugsweise zwei sich zumindest annähernd radial erstreckende und zumindest abschnittsweise ringförmig an der Außenumfangsfläche (120a) umlaufende Erhebungen (136) aufweist.

4. Laufrolle nach Anspruch 3,
**dadurch gekennzeichnet, daß** die Erhebungen (136) mit sich zumindest annähernd parallel zur Achse (A) der Nabe (120) erstreckenden Durchbrechungen (136a) versehen sind.

5. Laufrolle nach Anspruch 6 oder 7,
**dadurch gekennzeichnet, daß** die Erhebungen (136) im Querschnitt zumindest annähernd pyramidenförmig ausgebildet sind.

6. Laufrolle nach einem der Ansprüche 1 bis 5,
**dadurch gekennzeichnet, daß** zumindest ein Teil der in Kontakt mit dem Laufflächenmantel (140) kommenden Ecken und/oder Kanten des Zwischenmantels (130) abgerundet sind.

7. Laufrollen nach einem der Ansprüche 1 bis 6,
**dadurch gekennzeichnet, daß** die Nabe (120) aus wenigstens zwei in einer Nabenradialebene (R) aufeinandersetzbare Nabenhälften (122, 124) gebildet ist, die drehfest miteinander verbunden sind.

8. Laufrolle nach einem der Ansprüche 1 bis 7,
**dadurch gekennzeichnet, daß** die Nabe (320) an ihrer Außenumfangsfläche (320a) eine der Druckverteilung beim Einsatz der Laufrolle (300) angepaßte Kontur besitzt.

## Claims

1. A tread roller, in particular for inline skates, having a hub (120) and a running-surface casing (140) which bears the running surface and is formed on the hub (120) in a manner resistant to rotation, the hub (120) being provided on its outer peripheral surface (120a) with at least one intermediate casing (130) which is connected thereto in a manner resistant to rotation, on which casing the running-surface casing (140) is at least partially formed in a manner resistant to rotation,
**characterised in that** the intermediate casing (130) is provided with fastening tabs (134) which extend radially inwards, which can be attached by means of detachable fastening means (126) when the intermediate casing (130) is applied to the hub (120).

2. A tread roller according to Claim 1, **characterised in that** the rotation-resistant connection between the intermediate casing (130) and the running-surface casing (140) is produced by a material and/or positive connection.

3. A tread roller according to Claim 1 or 2, **characterised in that** the intermediate casing (130) has at least one, preferably two, approximately radially extending raised sections (136) which extend, at least in sections, in annular form around the outer peripheral surface (120a).

4. A tread roller according to Claim 3, **characterised in that** the raised sections (136) are provided with holes (136a) which extend at least approximately parallel to the axis (A) of the hub (120).

5. A tread roller according to Claim 6 or 7, **characterised in that** the raised sections (136) are at least approximately pyramid-shaped in cross-section.

6. A tread roller according to one of Claims 1 to 5, **characterised in that** at least part of the corners and/or edges of the intermediate casing (130) which come into contact with the running-surface casing (140) are rounded off.

7. Tread rollers according to one of Claims 1 to 6, **characterised in that** the hub (120) is formed of at least two hub halves (122, 124) which can be placed one above the other in a radial hub plane (R) and which are connected together in a manner resistant to rotation.

8. A tread roller according to one of Claims 1 to 7, **characterised in that** the hub (320) has on its outer peripheral surface (320a) a contour adapted to the pressure distribution when using the tread roller (300).

## Revendications

1. Galet de roulement, en particulier pour patin à roulettes alignées, avec un moyeu (120) et un bandage de bande de roulement (140) sur le moyeu (120), lequel bandage est formé pour résister à la rotation, montrant la bande de roulement, moyennant quoi le moyeu (120) est pourvu sur la surface périphérique extérieure (120a) d'au moins un bandage intermédiaire (130) résistant à la rotation, étroitement appliqué au moyeu sur lequel le bandage de la bande de roulement (140) est formé, au moins partiellement, pour résister à la rotation, **caractérisé en ce que** le bandage intermédiaire (130) est pourvu de pattes de fixation (134) s'étendant intérieurement de manière radiale, qui peuvent être montées à l'aide d'un moyen de fixation amovible (126), lorsque le bandage intermédiaire (130) est monté sur le moyeu (120).

2. Galet de roulement selon la revendication 1, **caractérisé en ce que** l'assemblage, résistant à la torsion, entre le bandage intermédiaire (130) et le bandage de la bande de roulement (140) a lieu par liaison des matières et/ou liaison mécanique.

3. Galet de roulement selon la revendication 1 ou 2, **caractérisé en ce que** le bandage intermédiaire (130) présente au moins une, de préférence, deux saillies circulaires (136) s'étendant au moins approximativement de manière radiale, et au moins par intervalle en forme d'anneau sur la surface périphérique extérieure (120a).

4. Galet de roulement selon la revendication 3, **caractérisé en ce que** les saillies (136) sont pourvues de perforations (136a) s'étendant au moins approximativement parallèlement à l'axe (A) du moyeu (120).

5. Galet de roulement selon la revendication 6 ou 7, **caractérisé en ce que** les saillies (136) sont formées transversalement au moins approximativement en forme de pyramide.

6. Galet de roulement selon l'une quelconque des revendications 1 à 5, **caractérisé en ce que** au moins une partie des angles et/ou des bords du bandage intermédiaire (130) entrant en contact avec le bandage de la bande de roulement (140) est arrondie.

7. Galet de roulement selon l'une quelconque des revendications 1 à 6, **caractérisé en ce que** le moyeu (120) est formé d'au moins deux moitiés de moyeu interchangeables (122, 124) dans un plan perpendiculaire au moyeu (R), lesquelles moitiés sont liées l'une à l'autre de manière à résister à une rotation.

8. Galet de roulement selon l'une quelconque des revendications 1 à 7, **caractérisé en ce que** le moyeu (320) présente à sa surface périphérique extérieure (320a) un profil adapté à la compensation de pression lors de la mise en action du galet de roulement (300).
